# EUROPÄISCHE PATENTSCHRIFT

(11) **EP 0 862 883 B1**
(45) Veröffentlichungstag und Bekanntmachung des Hinweises auf die Patenterteilung: **15.12.2004**
(21) Anmeldenummer: 97103901.1
(22) Anmeldetag: 07.03.1997
(51) Int. Cl.: A47J 31/46

(54) **Kaffeemaschine**
Coffee preparing apparatus
Machine à café

(43) Veröffentlichungstag der Anmeldung: 09.09.1998
(73) Patentinhaber: WMF WÜRTTEMBERGISCHE METALLWARENFABRIK AG, 73309 Geislingen/Steige (DE)
(72) Erfinder: Arndt, Peter, 89134 Blaustein (DE); Gussmann, Jochen, 73312 Geislingen/Stg. (DE); Kiefer, Alexander, 73329 Kuchen (DE); Wittlinger, Gerhard, 73312 Geislingen/Stg (DE)
(74) Vertreter: Grünecker, Kinkeldey, Stockmair & Schwanhäusser Anwaltssozietät

(56) Entgegenhaltungen:
- CH-A- 511 009
- CH-A- 572 334
- CH-A- 668 543
- DE-A- 4 213 895
- DE-A- 19 540 885
- FR-A- 1 367 182
- GB-A- 2 139 481

## Beschreibung

Die Erfindung bezieht sich auf eine Kaffeemaschine der im Oberbegriff von Anspruch 1 erläuterten Art.

Eine Kaffeemaschine der obengenannten Art, d.h. eine Kaffeemaschine die sowohl zur Zubereitung von Filterkaffee als auch zur Zubereitung von Espresso ausgerüstet ist, ist beispielsweise in der DE-A-44 27 745 beschrieben. Derartige Maschinen weisen entweder zwei Brüheinrichtungen, eine für Filterkaffee und eine für Espresso, auf oder sie verwenden eine einzige Brüheinrichtung mit unterschiedlichen Brühstellungen für Filterkaffee und Espresso. Weiterhin enthalten derartige Kaffeemaschinen entweder einen gemeinsamen Getränkeauslauf für Espresso und Kaffee, der mit beiden Brüheinrichtungen oder mit beiden Brühstellungen der gemeinsamen Brüheinrichtung verbunden ist, oder sie enthalten zwei getrennte Getränkausläufe für Kaffee und Espresso, die jedoch beide mit der gemeinsamen Brüheinrichtung verbunden sind. In beiden Fällen ist eine Umschalteinrichtung notwendig, um sicherzustellen, daß das gewünschte Getränk auch aus dem dafür vorgesehenen Getränkeauslauf fließt. Dafür werden gegenwärtig Ventile oder das in der obengenannten Druckschrift beschriebene Mehrscheiben-Verteilelement verwendet. Diese Bauteile erfordern jedoch zusätzlich Stauraum in dem relativ begrenzten Gehäuse einer Kaffeemaschine.

Der Verbraucher erwartet von einem guten Espresso, daß dieser mit einer Schicht aus einem hellen, möglichst feinporigen und standfesten Schaum, der sogenannten "Crema", bedeckt ist. Zum Erzeugen dieser Crema werden bei bekannten Maschinen spezielle Brühsiebe oder gesonderte Espressodüsen in der Espresso-Ausgabeleitung (meist als Lochblende oder federbelastete Kugeln ausgebildet) eingesetzt. Diese neigen jedoch einerseits zu Verstopfung und erfordern andererseits ebenfalls zusätzlichen Stauraum.

Der Erfindung liegt die Aufgabe zugrunde, eine Kaffeemaschine mit einer kompakt aufgebauten und weniger zur Verstopfung neigenden Einrichtung zur Crema-Erzeugung zu schaffen.

Die Aufgabe wird durch die kennzeichnenden Merkmale des Anspruchs 1 gelöst.

Durch die erfindungsgemäße Zusammenfassung der Umschalteinrichtung mit der Einrichtung zur Crema-Erzeugung zu einer Einheit wird eine kompakte Bauweise erreicht. Darüber hinaus wird durch die Bewegung der Einrichtung zur Crema-Erzeugung zusammen mit der Umschalteinrichtung deren Verstopfungsneigung wesentlich reduziert.

Durch die Ausgestaltung nach Anspruch 2 erfolgt das Umschalten von Kaffee zu Espresso und umgekehrt in einfacher Weise dadurch, daß lediglich die Einrichtung zur Crema-Erzeugung in den Strömungsweg hinein- und herausbewegt wird, so daß die Konstruktion noch kompakter wird.

Gemäß Anspruch 3 kann bei dieser Ausgestaltung in einfacher Weise auch ein Umschalten zur Verbindung der Brüheinrichtung mit einem Vorratsbehälter vorgesehen werden.

Der für die Umschalteinrichtung gemäß Anspruch 4 verwendete Ventilstößel trägt zu einer kompakten Bauweise und einfachen Steuerung bei, und kann auf konstruktiv einfache Weise mit der Einrichtung zur Crema-Erzeugung versehen werden, die in seiner ersten Position den Strömungsweg für Espresson eingeschaltet wird und in einer zweiten Position gemäß Anspruch 5 und/oder einer dritten Position gemäß Anspruch 6 aus diesem Strömungsweg zurückgezogen wird, so daß Kaffee ohne besondere Crema-Erzeugung über den Getränkeauslauf direkt in ein untergestelltes Gefäß oder in einen Vorratsbehälter fließen kann.

Die in Anspruch 7 beschriebene horizontale Anordnung der Einrichtung zur Crema-Erzeugung dient einerseits einem besseren Aufschäumen und erlaubt andererseits eine konstruktiv einfache Ausgestaltung.

Dabei sorgt die Verteilnut gemäß Anspruch 8 dafür, daß der einfließende Espresso gleichmäßig verteilt wird.

In den Ansprüchen 9 bis 12 ist ein erstes Ausführungsbeispiel einer Einrichtung zur Crema-Erzeugung beschrieben, wobei durch die in Anspruch 9 beschriebene Ringspaltdüse die Verstopfungsneigung dieser Einrichtung noch weiter herabgesetzt wird.

Die Ausbildung einer besonders feinporigen und standfesten Crema wird durch die in Anspruch 10 beschriebene, der Ringspaltdüse zugeordnete Verwirbelungszone verbessert.

Zweckmäßigerweise ist die Verwirbelungszone gemäß Anspruch 11 zwischen zwei Bereichen der Ringspaltdüse angeordnet.

Durch die in Anspruch 12 beschriebene, axiale Strömungsnut wird trotz der guten Verwirbelung die Strömung beschleunigt, so daß der Espresso relativ zügig ausgegeben werden kann.

Die Ansprüche 13 und 14 beschreiben ein weiteres Ausführungsbeispiel einer Einrichtung zur Crema-Erzeugung, das mit der Umschalteinrichtung kombiniert werden kann.

Ausführungsbeispiele der Erfindung werden nachfolgend anhand der Zeichnungen näher erläutert. Es zeigen:
- Fig. 1: eine schematische Darstellung einer erfindungsgemäß ausgerüsteten Kaffeemaschine,
- Fig. 2: einen Längsschnitt durch ein erstes Ausführungsbeispiel einer Vorrichtung zur Crema-Erzeugung,
- Fig. 3: eine vergrößerte Darstellung des Details A aus Fig. 2,
- Fig. 4: eine vergrößerte Darstellung eines Ventilstößelkopfes aus Fig. 2,
- Fig. 5: den Schnitt V-V aus Fig. 4,
- Fig. 6: die Einrichtung zur Crema-Erzeugung aus Fig. 2 in einer zweiten Position,
- Fig. 7: die Einrichtung zur Crema-Erzeugung aus Fig. 2 in einer dritten Position, und
- Fig. 8: ein weiteres Ausführungsbeispiel einer Einrichtung zur Crema-Erzeugung.

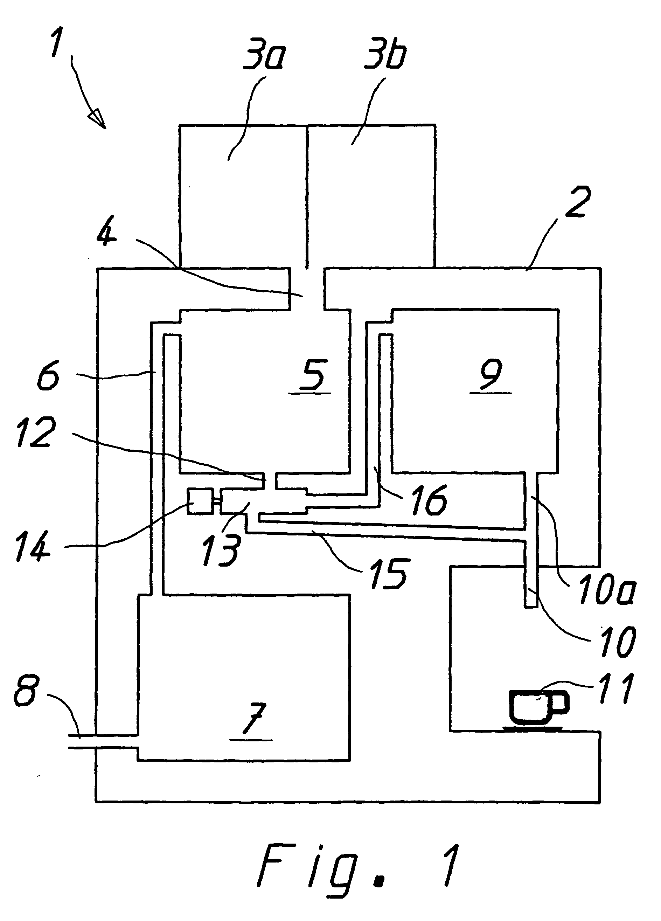

Aus Fig. 1 sind in schematischer Darstellung die wesentlichsten Bestandteile einer Kaffeemaschine 1 dargestellt, mit der sowohl Filterkaffee als auch Espresso zubereitet werden kann. Der Begriff "Espresso" soll für die Zwecke der nachfolgenden Beschreibung jedes Getränk umfassen, für das eine Crema erforderlich ist, d.h. insbesondere Espresso und Kaffee-Creme. Die Kaffeemaschine 1 enthält ein Gehäuse 2, auf dem einer oder bevorzugte zwei Vorratsbehälter 3a, 3b zum Aufnehmen unterschiedlicher Kaffeesorten angeordnet sind. Die Vorratsbehälter 3a, 3b sind über einen Beschickungskanal 4 mit einer Brüheinrichtung 5 im Inneren des Gehäuses 2 verbunden, die entweder aus zwei getrennten Brüheinrichtungen für Kaffee und Espresso zusammengesetzt ist, oder verschiedene Brühstellungen für Kaffee und Espresso aufweisen. In die Brüheinrichtung 5 mündet eine Leitung 6 von einem Heißwasserbereiter 7, der über eine Zufuhrleitung 8 mit Kaltwasser versorgt wird. Im Inneren des Gehäuses 2 ist weiterhin ein Vorratsbehälter 9 vorgesehen, der über eine Ablaufleitung 10a mit einem Getränkeauslauf 10 verbunden ist, der aus dem Gehäuse 2 herausführt und so angeordnet ist, daß ein Gefäß 11, dargestellt ist eine Tasse, zum Befüllen untergestellt werden kann.

Die Brüheinrichtung 5 ist über eine Ablaufleitung 12 mit einer Umschalteinrichtung 13 verbunden, die durch einen Motor 14 angetrieben wird. Die Umschalteinrichtung 13 ist über eine erste Ablaufleitung 15 mit dem Getränkeauslauf 10 und eine zweite Ablaufleitung 16 mit dem Vorratsbehälter 9 verbunden.

An der Außenseite des Gehäuses 2 sind weiterhin die üblichen Bedienungselemente und Anzeigen angeordnet, die mit einer ebenfalls nicht gezeichneten Steuerung im Inneren des Gehäuses 2 verbunden sind, um die gewünschten Brüh- und Ausgabevorgänge einleiten und durchführen zu können.

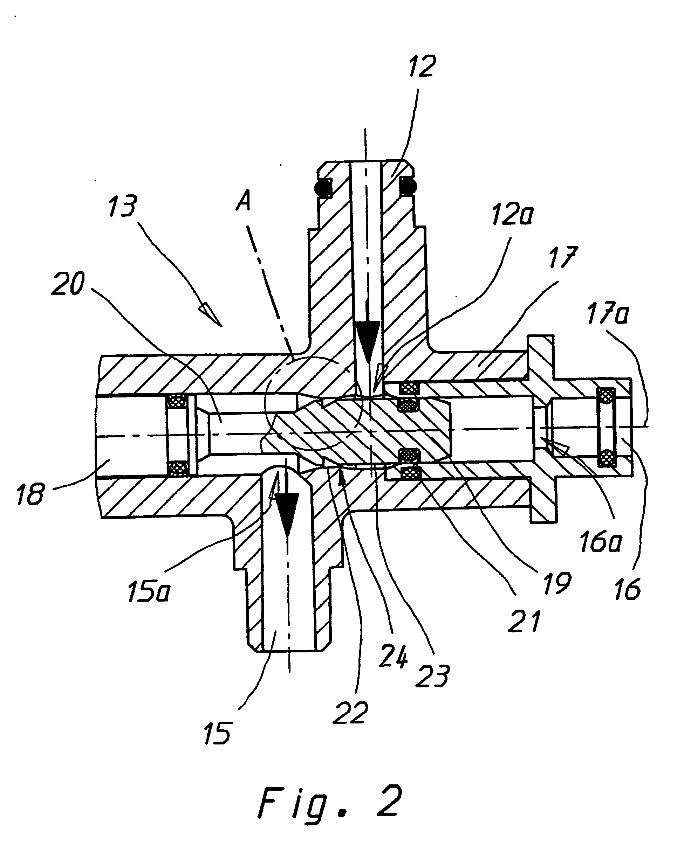

Wie die Fig. 2 bis 7 zeigen, enthält ein erstes Ausführungsbeispiel der Umschalteinrichtung 13 ein im wesentlichen zylindrisches Gehäuse 17, das mit im wesentlichen horizontaler Mittelachse 17a liegend angeordnet ist. In das Gehäuse 17 mündet von oben im wesentlich radial die Zulaufleitung 12 mit einer Zulauföffnung 12a ein. An der gegenüberliegenden, unteren Seite des Gehäuses 17 und entlang der Achse 17a nach links versetzt mündet die Ablaufleitung 15 mit einer Ablauföffnung 15a radial aus. An der dem Motor 14 (Fig. 1) abgewandten Stirnseite mündet die zweite Ablaufleitung 16 zum Vorratsbehälter 9 mit ihrer Ablauföffnung 16a aus.

Im Inneren des Gehäuses 17 ist ein im wesentlichen zylindrischer Ventilstößel 18 angeordnet, der über den Motor 14 in Axialrichtung zur Mittelachse 17a verschiebbar ist. Der Ventilstößel 18 weist einen Kopf 19 und einen Schaft 20 auf. Der Kopf 19 ist in der Nähe seines freien Endes mit einem Dichtungsring 21 versehen, mit dem er an der Innenwand des Gehäuses 17 abdichtend anliegt, wobei an denjenigen Stellen der Innenwand des Gehäuses 17, an der bei einer bestimmten Position des Ventilstößel 18 eine Abdichtung gewünscht ist, ein Dichtvorsprung vorgesehen werden kann, wie dies beispielsweise anhand des Dichtvorsprunges 22 zwischen den beiden Öffnungen 12a und 15a gezeigt ist. Im Bereich der Zulauföffnung 12a weist die Innenwand des Gehäuses 17 weiterhin eine nutartige Vertiefung 23 auf, die sich an der Stelle der Zulauföffnung 12 über den gesamten Umfang der Innenwand des Gehäuses 17 erstreckt und als Verteilnut für den durch die Öffnung 12a zufließenden Espresso dient.

Jenseits des Dichtungsringes 21, d.h. auf der dem freien Ende abgewandten Seite des Dichtungsringes 21 ist der Außendurchmesser des Kopfes 19 geringer als der Innendurchmesser des Gehäuses 17, und bildet somit einen Strömungspfad für Espresso zwischen der Öffnung 12a und der Öffnung 15a, wenn sich der Ventilkopf 19 in der in Fig. 2 gezeigten Position befindet, während die Verbindung zwischen der Öffnung 12a und der Öffnung 16a durch den Dichtring 21 abgesperrt ist.

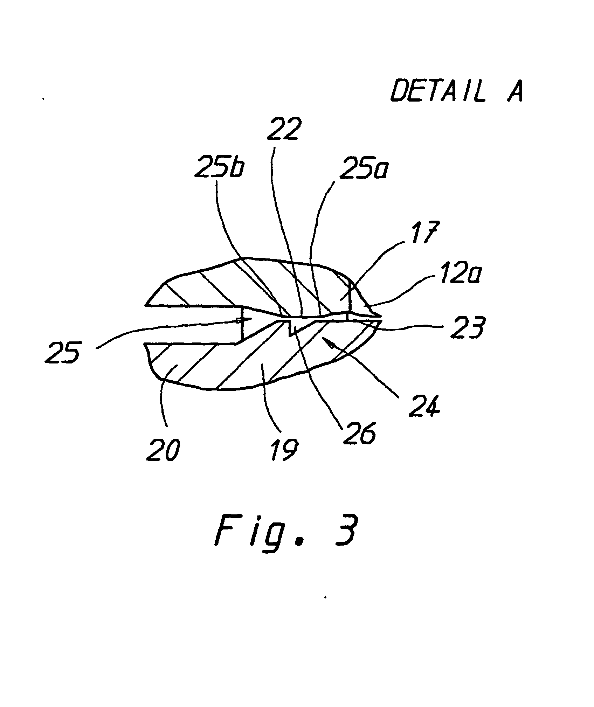

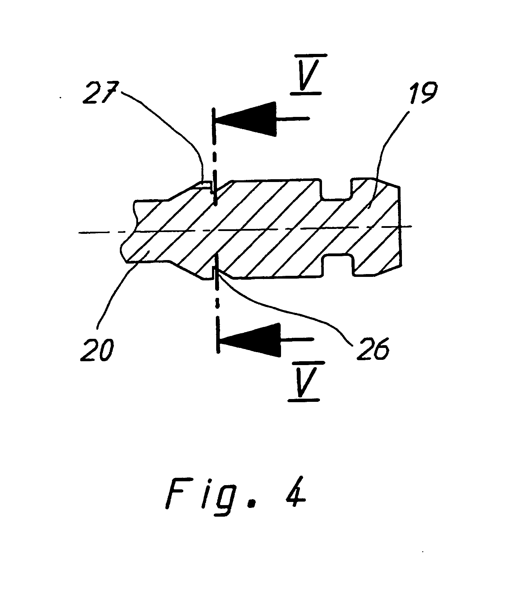

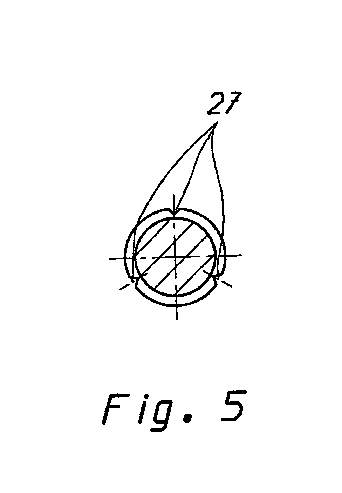

Wie insbesondere in Fig. 3 gezeigt, ist im Strömungspfad für Espreso eine Einrichtung 24 zur Crema-Erzeugung vorgesehen, die zwischen der Umfangsfläche des Ventilkopfes 19 und der Innenwand des Gehäuses 17 ausgebildet ist. Die Einrichtung 24 umfaßt eine Ringspaltdüse 25 mit dem kleinsten Durchflußquerschnitt im Bereich des Strömungspfades für Espresso. Die Einrichtung 24 enthält weiterhin eine Verwirbelungszone 26 mit größerem Durchflußquerschnitt in Form einer ringförmigen Nut mit einem im wesentlichen dreieckigen Querschnitt, dessen Spitze zur Zulauföffnung 12a weist und dessen Basis im wesentlichen radial verläuft. Die Verwirbelungszone 26 ist der Ringspaltdüse 25 derart zugeordnet, daß sie die Ringspaltdüse 25 in einen ersten, stromaufwärts liegenden Bereich 25a und einen zweiten, stromabwärts liegenden Bereich 25b teilt. Der erste Bereich 25a schließt sich an die Verteilnut 23 an, wobei sich der Durchflußquerschnitt der Verteilnut 23 in Richtung auf den ersten Bereich 25a der Ringspaltdüse 25 stetig verringert. In Axiatrichtung stromabwärts des zweiten Bereichs 25b verringert sich der Außendurchmesser des Kopfes 19 stetig bis auf den Durchmesser des Schaftes 20, wobei der Außendurchmesser des Schaftes 20 zumindest um einen solchen Betrag kleiner ist als der Innendurchmesser des Gehäuses 17, daß der Durchflußquerschnitt im Bereich des Schaftes 20 nicht kleiner ist als der Durchflußquerschnitt der Zulauföffnung 12a bzw. der Ablauföffnung 15a. Im zweiten Bereich 25b der Ringspaltdüse sind die in den Fig. 4 und 5 näher dargestellten Strömungsnuten 27 eingearbeitet. Die Strömungsnuten 27 erstecken sich in Axialrichtung von der Verwirbelungszone 26 vollständig durch den zweiten Bereich 25b hindurch. Es sind drei gleichmäßig um den Umfang des zweiten Bereichs 25b verteilt angeordnete Strömungsnuten mit einem im wesentlichen dreieckigen Querschnitt vorgesehen. Die Tiefe der Strömungsnuten 27 kann geringer sein als die Tiefe der Verwirbelungszone 26.

Nachfolgend werden verschiedene Betriebsweisen der erfindungsgemäßen Kaffeemaschine 1 erläutert.

Wird an den Bedienungselementen der Kaffeemaschine 1 die Zubereitung eines Espresso oder einer Tasse Kaffee-Creme gewählt, so wird, bei der angenommenen automatischen Betriebsweise der Kaffeemaschine 1, die benötigte Portion Espressokaffeemehl dem entsprechenden Vorratsbehälter 3a oder 3b entnommen und der Brüheinrichtung 5 zugeführt, die einen Brühzyklus zum Zubereiten des Espresso einleitet. Gleichzeitig wird durch den Motor 14 der Ventilstößel 18 in die in Fig. 2 gezeigte Stellung verfahren, in der der Dichtring 21 sich zwischen der Zulauföffnung 12a und der Ablauföffnung 16a zum Vorratsbehälter 9 befindet und die Ablauföffnung 15a dem Schaft 20 gegenüberliegt. In dieser Stellung des Kopfes 19 liegt die Einrichtung 24 zur Crema-Erzeugung im Strömungspfad des Espressos zwischen der Zulauföffnung 12a und der Ablauföffnung 15a, wobei die Abmessungen des Kopfes 19 und des Gehäuses 17 so aufeinander abgestimmt sind, daß die Ringspaltdüse 25 dem Dichtvorsprung 22 gegenüberliegt, so daß nur die für die Ringspaltdüse notwendige axiale Länge den dadurch gebildeten, besonders engen Durchflußquerschnitt bildet. Der in Richtung des Pfeiles zufließende Espresso gelangt zunächst aus der Zulauföffnung 12a in die Verteilnut 23, wo er im wesentlichen gleichmäßig um den Umfang des Kopfes 19 herum verteilt wird. Anschließend wird er durch den ersten Bereich 25a der Ringspaltdüse gepreßt und beschleunigt, und gelangt dann unter Entspannung in die Verwirbelungszone mit größerem Durchflußquerschnitt, wird dadurch noch stärker verwirbelt und wird anschließend über die Strömungsnuten 27 und zum Teil über den zweiten Bereich 25b der Ringspaltdüse abgezogen, wobei die Strömungsnuten 27 dafür sorgen, daß die Strömung nicht abreißt und somit eine kontinuierliche Ausgabe des Espressos erfolgen kann. Stromabwärts des zweiten Bereichs 25b wird der Espresso wiederum entspannt und gelangt dann über die Ablauföffnung 15a in den Getränkeauslauf 10.

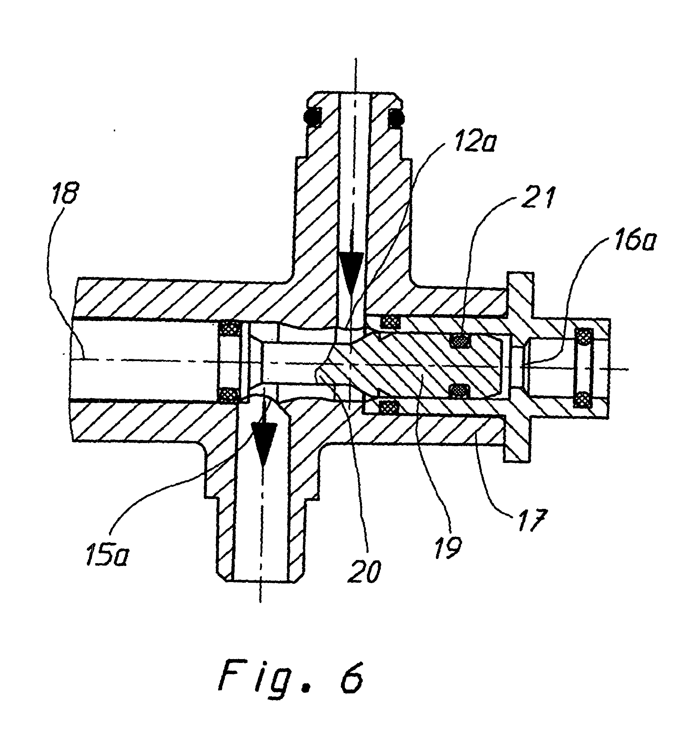

Wird an der Kaffeemaschine 1 die Ausgabe von Kaffee aus dem Getränkeauslauf vorgewählt, so erfolgt wiederum ein Brühvorgang, diesmal unter Verwendung der für Filterkaffee geeigneten Kaffeesorte, und der Ventilstößel 18 wird durch den Motor 14 in die in Fig. 6 gezeichnete, äußerste rechte Position verfahren. In dieser Position dichtet wiederum der Dichtring 21 die Verbindung zwischen der Zulauföffnung 12a und der Ablauföffnung 16a zum Vorratsbehälter 9 ab. Darüber hinaus sind die Abmessungen des Gehäuses 17 so auf die Abmessung des Kopfes 19 abgestimmt, daß der Zulauföffnung 12a der Schaft 20 gegenüberliegt, so daß keinerlei Querschnittsverengung beim Übergang zwischen der Zulauföffnung 12a und der Ablauföffnung 15a zum Getränkeauslauf 10 vorhanden ist, so daß der Kaffee einfach durchlaufen kann.

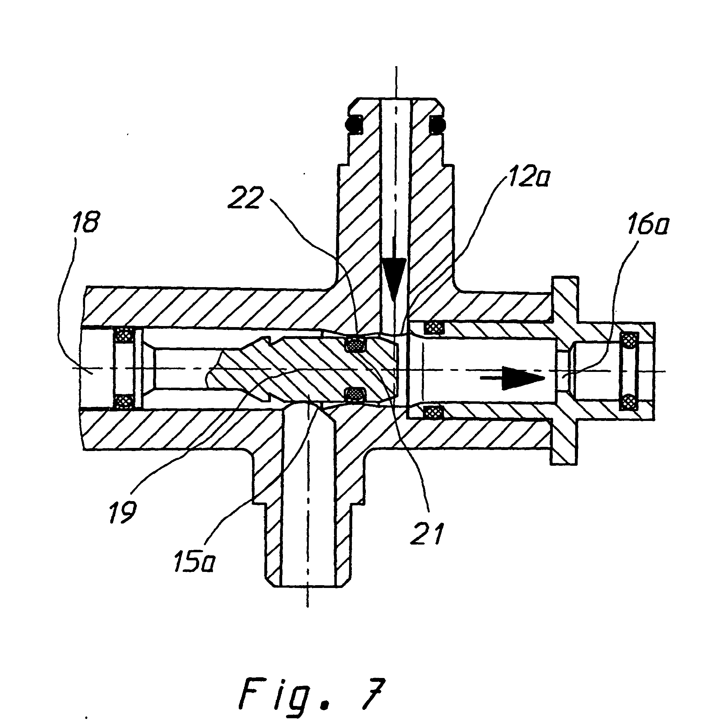

Soll Kaffee in den Vorratsbehälter 9 gebrüht werden, so wird der Ventilstößel 18 durch den Motor 14 in die in Fig. 7 gezeigte Position verfahren, in der der Dichtring 21 am Dichtvorsprung 22 anliegt und die Verbindung zwischen der Zulauföffnung 12a und der Ablauföffnung 15a zum Getränkeauslauf 10 abdichtet. In dieser Position gibt der Kopf 19 die Verbindung zwischen der Zulauföffnung 12a und der Ablauföffnung 16a zum Vorratsbehälter 9 frei, so daß der Vorratsbehälter befüllt werden kann.

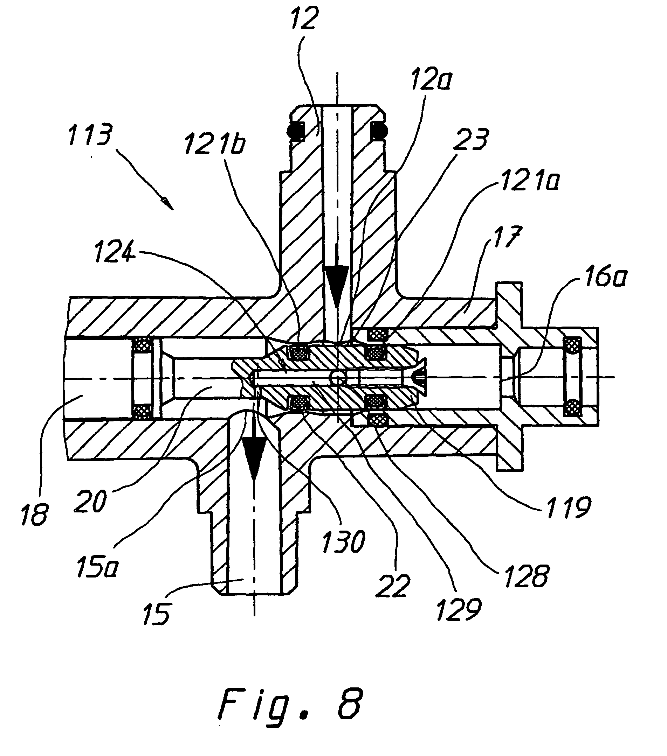

Fig. 8 zeigt ein zweites Ausführungsbeispiel einer Umschalteinrichtung 113, die mit einer Einrichtung 124 zum Erzeugen einer Crema gekoppelt ist. Die Umschalteinrichtung 113 entspricht bis auf die nachfolgend beschriebenen Einzelheiten der Umschalteinrichtung 13 des vorangegangenen Ausführungsbeispiels, wobei gleiche bzw. vergleichbare Bauteile mit den gleichen Bezugszeichen gekennzeichnet und nicht nochmals erläutert wurden. Die Umschalteinrichtung 113 enthält einen Ventilstößel 18 mit einem Schaft 20 und einem abgewandelten Kopf 119. Der Kopf 119, der im übrigen in gleicher Weise in den Schaft 20 übergeht, wie dies am vorangegangenen Ausführungsbeispiel beschrieben wurde, weist zwei axial zueinander beabstandete Dichtringe 121a und 121b auf, wobei der erste Dichtring 121a, analog dem Dichtring 21, in der Nähe des freien Endes des Kopfes 119 angeordnet ist und der zweite Dichtring 121b den Kopf 119 am dem Schaft 20 zugewandten Ende umgibt.

Die Einrichtung 124 zur Crema-Erzeugung enthält eine Radialbohrung 128, die sich von der Verteilnut 23 in das Innere des Kopfes 119 erstreckt und dort in einen axial verlaufenden Strömungskanal 129 mündet, der bis zur Öffnung 15a reicht, wenn sich die Radialbohrung 128 im Bereich der Verteilnut 23 befindet. Am Ende des Strömungskanals 129 mündet dieser in eine Lochdüse 130 mit merklich kleinerem Durchflußquerschnitt als der Strömungskanal 129, wobei die Lochdüse 130 am Außenumfang des Ventilstößels 18 mündet und in Richtung auf die Ablauföffnung 15a weist.

In der in Fig. 8 gezeigten, ersten Position des Ventilstößels 18 liegen somit die beiden Dichtringe 121a und 121b, letzterer am Dichtvorsprung 22, beidseitig der Zulauföffnung 12a abdichtend an der Innenwand des Gehäuses 17 an. Der zulaufende Espresso gelangt somit über die Öffnung 12a, die Verteilnut 23 in die Radialbohrung 128, von dort in den Strömungskanal 129 und wird anschließend durch die Lochdüse 130 gepreßt, entspannt sich und fließt in die Ablauföffnung 15a, wodurch sich eine standfeste, feinporige Crema ergibt.

Analog zum ersten Ausführungsbeispiel wird beim Zubereiten und Ausgeben von Kaffee über den Getränkeauslauf der Kopf 119 vollständig nach rechts verschoben, so daß beide Dichtringe 121a und 121b die Verbindung zwischen der Öffnung 12a und der Öffnung 16a abdichten, und der Kaffee um den Schaft 20 herum in die Ablauföffnung 15a ungehindert durchfließen kann.

Soll in den Vorratsbehälter 9 gebrüht werden, so wird auch der Kopf 119 ganz nach links verschoben, bis der erste Dichtring 121a im Bereich des Dichtvorsprunges 22 die Verbindung zwischen der Öffnung 12a und der Öffnung 15a abdichtet, so daß Kaffee ungehindert in den Vorratsbehälter fließen kann.

In Abwandlung der beschriebenen und gezeichneten Ausführungsbeispiele kann die erfindungsgemäße Einrichtung zur Crema-Erzeugung auch bei Kaffeemaschinen verwendet werden, die eine abweichende Anzahl von Zu- und Ablaufleitungen aufweist, beispielsweise zwei Zulaufleitungen und eine Ablaufleitung oder zwei Zulaufleitungen und zwei Ablaufleitungen, wobei die Umschalteinrichtung in diesen Fällen auch beim Umschalten zwischen Kaffee und Espresso eine Ventilfunktion zum Absperren einer oder mehrerer Zu- und Ablauföffnungen übernehmen kann. Darüber hinaus kann insbesondere diejenige Einrichtung zur Crema-Erzeugung, die die besonders gegen eine Verstopfung resistente Ringspaltdüse verwendet, auch bei Kaffeemaschinen eingesetzt werden, die eine eigene Verbindung zwischen einer Brüheinrichtung für Espresso und einem gesonderten Auslauf für Espresso aufweist oder sogar in reinen Espressomaschinen, gegebenenfalls auch stationär, eingesetzt werden. Weiterhin ist denkbar, daß die Einrichtung zur Crema-Erzeugung auch in den Strömungspfad für Espresso hineingedreht oder hineinverschwenkt werden kann. Im Ausführungsbeispiel nach den Fig. 2 bis 7 kann weiterhin der zweite Bereich der Ringspaltdüse entfallen und der Kopf an dieser Stelle beispielsweise bis zur Gehäusewandung reichen.

## Patentansprüche

1. Kaffeemaschine (1) mit einer Brüheinrichtung (5) für Espresso und Kaffee, einem Getränkeauslauf (10) für Espresso und Kaffee und einer mit einer Zu- und einer Ablauföffnung (12a, 15a) versehenen Umschalteinrichtung (13, 113) zum Umschalten des Getränkeauslaufs (10) von Kaffee auf Espresso und umgekehrt, **gekennzeichnet durch** eine Einrichtung (24, 124) zum Erzeugen einer Crema, die mit der Umschalteinrichtung (13, 113) zu einer Einheit verbunden und mit ihr bewegbar ist.

2. Kaffeemaschine nach Anspruch 1, **dadurch gekennzeichnet, dass** die Umschalteinrichtung (13, 113) über eine einzige Zu- und/oder eine einzige Ablauföffnung (12a, 15a) für Espresso und Kaffee mit dem Getränkeauslauf (10) und/oder der Brüheinrichtung (5) verbunden ist, und durch die Umschalteinrichtung (13, 113) die Einrichtung (24, 124) zur Crema-Erzeugung zwischen die Zulauföffnung (12a) und die Ablauföffnung (15a) bewegbar ist.

3. Kaffeemaschine nach Anspruch 1 oder 2, **dadurch gekennzeichnet, dass** die Umschalteinrichtung (13, 113) eine zweite Ablauföffnung (16a) zur Verbindung mit einem Vorratsbehälter (9) aufweist.

4. Kaffeemaschine nach einem der Ansprüche 1 bis 3, **dadurch gekennzeichnet, dass** die Umschalteinrichtung (13, 113) einen zwischen wenigstens zwei Positionen verschiebbaren Ventilstößel (18) aufweist, der zum Erzeugen der Crema in einer ersten Position einen Strömungspfad für Espresso bildet, in dem sich Bereiche (25, 26, 129, 130) mit unterschiedlich großen Durchflussquerschnitten abwechseln, wobei der Durchflussquerschnitt wenigstens eines Bereichs (25, 130) kleiner ist als der Durchflussquerschnitt der Zulauföffnung (12a).

5. Kaffeemaschine nach Anspruch 4, **dadurch gekennzeichnet, dass** der Ventilstößel (18) in einer zweiten Position unter Umgehung der Einrichtung (24, 124) zur Crema-Erzeugung einen Strömungspfad für Kaffee bildet.

6. Kaffeemaschine nach Anspruch 4 oder 5, **dadurch gekennzeichnet, dass** bei einer Kaffeemaschine (1) mit sowohl einem Getränkeauslauf (10) für Kaffee als auch einem Vorratsbehälter (9) für Kaffee, der Ventilstößel (18) zwischen drei Positionen bewegbar ist, wobei er in der dritten Position einen Strömungspfad für Kaffee zum Vorratsbehälter (9) unter Umgehung der Einrichtung (24, 124) zur Crema-Erzeugung bildet.

7. Kaffeemaschine nach Anspruch 5 oder 6, **dadurch gekennzeichnet, dass** der zylindrische Ventilstößel (18) in einem zylindrischen Gehäuse (17) mit im wesentlichen horizontal liegender Achse (17a) linear bewegbar ist, dass die Zulauföffnung (12a) und die Ablauföffnung (15a) in Axialrichtung gegeneinander versetzt in das Gehäuse (17) einmünden, und dass der Ventilstößel (18) einen Kopf (19, 119) und einen Schaft (20) aufweist, wobei der Kopf (19, 119) an wenigstens einem Umfangsbereich (21, 121a, 121b) abdichtend am Gehäuse (17) anliegt und den Strömungspfad für Espresso bildet und wobei der Schaft (20) einen geringeren Durchmesser als der Kopf (19) aufweist und den Strömungspfad für Kaffee bildet.

8. Kaffeemaschine nach einem der Ansprüche 4 bis 7, **dadurch gekennzeichnet, dass** der Ventilstößel (18) im Bereich der Zulauföffnung (12a) eine ringförmige Verteilnut (23) bildet.

9. Kaffeemaschine nach einem der Ansprüche 1 bis 8, **dadurch gekennzeichnet, dass** die Einrichtung (24) zur Crema-Erzeugung eine Ringspaltdüse (25) mit einem gegenüber der Zulauföffnung (12a) kleineren Durchflussquerschnitt aufweist.

10. Kaffeemaschine nach Anspruch 9, **dadurch gekennzeichnet, dass** der Ringspaltdüse (25) eine Verwirbelungszone (26) zugeordnet ist.

11. Kaffeemaschine nach einem der Ansprüche 1 bis 10, **dadurch gekennzeichnet, dass** die Einrichtung (24) zur Crema-Erzeugung eine Ringspaltdüse (25) mit einem ersten, stromaufwärts direkt vor einer Verwirbelungszone (26) und einem zweiten, stromabwärts direkt nach der Verwirbelungszone (26) angeordneten Bereich (25a, 25b) aufweist.

12. Kaffeemaschine nach Anspruch 10 oder 11, **dadurch gekennzeichnet, dass** sich an die Verwirbelungszone (26) wenigstens eine sich axial in Fließrichtung des Espresso erstreckende Strömungsnut (27) anschließt.

13. Kaffeemaschine nach einem der Ansprüche 1 bis 8, **dadurch gekennzeichnet, dass** die Einrichtung (124) zur Crema-Erzeugung eine Lochdüse (130) mit einem gegenüber der Zulauföffnung (12a) und gegenüber der Ablauföffnung (15a) kleineren Durchflussquerschnitt aufweist.

14. Kaffeemaschine nach den Ansprüchen 7 und 13, **dadurch gekennzeichnet, dass** der Lochdüse (130) ein Strömungskanal (129) mit einem gegenüber der Verteilnut (23) vergrößertem Durchflussquerschnitt vorgeordnet ist.

## Claims

1. Coffee machine (1) with a brewing device (5) for espresso and coffee, a beverage outlet (10) for espresso and coffee and a switching device (13, 113) provided with an inlet opening and an outlet opening (12a, 15a) for switching the beverage outlet (10) from coffee to espresso and vice versa, **characterised by** a device (24, 124) for producing a cream which is connected to the switching device (13, 113) so as to form one unit and can be moved therewith.

2. Coffee machine according to claim 1, **characterised in that** the switching device (13, 113) is connected by means of one single inlet opening and/or one single outlet opening (12a, 15a) for espresso and coffee to the beverage outlet (10) and/or the brewing device (5) and the device (24, 124) for producing cream can be moved between the inlet opening (12a) and the outlet opening (15a) by the switching device (13, 113).

3. Coffee machine according to claim 1 or claim 2, **characterised in that** the switching device (13, 113) has a second outlet opening (16a) for connection to a reservoir (9).

4. Coffee machine according to one of claims 1 to 3, **characterised in that** the switching device (13, 113) has a valve stem (18) which can be displaced between at least two positions and which, in a first position, forms a flow path for espresso in which regions (25, 26, 129, 130) with different flow areas alternate in order to produce the cream, the flow area of at least one region (25, 130) being smaller than the flow area of the inlet opening (12a).

5. Coffee machine according to claim 4, **characterised in that**, in a second position, the valve stem (18) forms a flow path for coffee, bypassing the device (24, 124) for producing cream.

6. Coffee machine according to claim 4 or claim 5, **characterised in that**, in the case of a coffee machine (1) with both a beverage outlet (10) for coffee and a reservoir (9) for coffee, the valve stem (18) can be moved between three positions and, in the third position, forms a flow path for coffee to the reservoir (9), bypassing the device (24, 124) for producing cream.

7. Coffee machine according to claim 5 or claim 6, **characterised in that** the cylindrical valve stem (18) can be moved linearly in a cylindrical housing (17) with a substantially horizontal axis (17a), that the inlet opening (12a) and the outlet opening (15a) lead into the housing (17) in such a manner that they are offset from one another in the axial direction and that the valve stem (18) has a head (19, 119) and a shaft (20), the head (19, 119) bearing against the housing (17) in a sealing manner at least in a circumferential region (21, 121 a, 121b) and forming the flow path for espresso and the shaft (20) having a smaller diameter than the head (19) and forming the flow path for coffee.

8. Coffee machine according to one of claims 4 to 7, **characterised in that** the valve stem (18) forms an annular distributor groove (23) in the region of the inlet opening (12).

9. Coffee machine according to one of claims 1 to 8, **characterised in that** the device (24) for producing cream has an annular nozzle (25) with a smaller flow area than the inlet opening (12a).

10. Coffee machine according to claim 9, **characterised in that** a turbulence zone (26) is associated with the annular nozzle (25).

11. Coffee machine according to one of claims 1 to 10, **characterised in that** the device (24) for producing cream has an annular nozzle (25) with a first region (25a) arranged directly upstream of a turbulence zone (26) and a second region (25b) arranged directly downstream of the turbulence zone (26).

12. Coffee machine according to claim 10 or claim 11, **characterised in that** at least one flow groove (27) extending axially in the flow direction of the espresso is connected to the turbulence zone (26).

13. Coffee machine according to one of claims 1 to 8, **characterised in that** the device (124) for producing cream has a perforated nozzle (130) with a smaller flow area than the inlet opening (12a) and the outlet opening (15a).

14. Coffee machine according to claims 7 and 13, **characterised in that** a flow channel (129) with a larger flow area than the distributor groove (23) is arranged upstream of the perforated nozzle (130).

## Revendications

1. Machine à café (1) avec un dispositif d'échaudage (5) pour expresso et café, avec un écoulement de boissons (10) pour expresso et café et avec un dispositif d'inversion (13, 113) pourvu d'un orifice d'alimentation et d'écoulement (12a, 15a) pour inverser l'écoulement de la boisson (10) en passant du café à l'expresso et inversement, **caractérisée par** un dispositif (24, 124) pour produire une crème, dispositif qui est relié avec le dispositif d'inversion (13, 113) en une unité et qui est mobile avec lui.

2. Machine à café selon la revendication 1, **caractérisée en ce que** le dispositif d'inversion (13, 113) est relié à l'écoulement de boissons (10) et/ou au dispositif d'échaudage (5) via un seul orifice d'alimentation et/ou un seul orifice d'écoulement (12a, 15a) pour expresso et café, et **en ce que** le dispositif (24, 124) pour la production de crème est mobile entre l'orifice d'alimentation (12a) et l'orifice d'écoulement (15a) via le dispositif d'inversion (13, 113).

3. Machine à café selon la revendication 1 ou 2, **caractérisée en ce que** le dispositif d'inversion (13, 113) comporte un second orifice d'écoulement (16a) en liaison avec un réservoir de stockage (9).

4. Machine à café selon l'une des revendications 1 à 3, **caractérisée en ce que** le dispositif d'inversion (13, 113) comprend un poussoir de soupape (18) déplaçable au moins entre deux positions, poussoir qui, pour produire de la crème, forme dans une première position une voie d'écoulement pour expresso, dans laquelle des zones (25, 26, 129, 130) alternent avec des sections d'écoulement de taille différente, sachant que la section d'écoulement d'au moins une zone (25, 130) est inférieure à la section d'écoulement de l'orifice d'alimentation (12a).

5. Machine à café selon la revendication 4, **caractérisée en ce que** le poussoir de soupape (18) forme dans une seconde position une voie d'écoulement pour café en contournant le dispositif ( 24, 124 ) de production de crème.

6. Machine à café selon la revendication 4 ou 5, **caractérisée en ce que** dans le cas d'une machine à café (1) avec non seulement un écoulement de boisson (10) pour café mais aussi avec un réservoir de stockage (9) pour café, le poussoir de soupape (18) est mobile entre trois positions, sachant que dans la troisième position il forme une voie d'écoulement pour café jusqu'au réservoir de stockage (9) en contournant le dispositif (24, 124) de production de crème.

7. Machine à café selon la revendication 5 ou 6, **caractérisée en ce que** le poussoir cylindrique de soupape (18) est mobile de manière linéaire dans un boîtier cylindrique (17) avec un axe (17a) se trouvant sensiblement à l'horizontale, **en ce que** l'orifice d'alimentation (12a) et l'orifice d'écoulement (15a), en quinconce l'un par rapport à l'autre, débouchent dans le sens axial dans le boîtier (17), et **en ce que** le poussoir de soupape (18) comporte une tête (19, 119) et une tige (20), la tête (19, 119) étant adjacente de manière étanche au boîtier (17) à au moins une zone périphérique (21, 121a, 121b) et formant la voie d'écoulement pour expresso, et la tige (20) comportant un diamètre plus petit que la tête (19) et formant la voie d'écoulement pour café.

8. Machine à café selon l'une des revendications 4 à 7, **caractérisée en ce que** le poussoir de soupape (18) forme une rainure annulaire de distribution (23) dans la zone de l'orifice d'alimentation (12a).

9. Machine à café selon l'une des revendications 1 à 8, **caractérisée en ce que** le dispositif (24) pour produire de la crème comporte une buse à espace annulaire (25) avec une section d'écoulement inférieure par rapport à l'orifice d'alimentation (12a).

10. Machine à café selon la revendication 9, **caractérisée en ce qu'**une zone de tourbillonnement (26) est conjuguée à la buse à espace annulaire (25).

11. Machine à café selon l'une des revendications 1 à 10, **caractérisée en ce que** le dispositif (24) de production de crème comprend une buse à espace annulaire (25) avec une première zone (25a, 25b) disposée en amont directement avant une zone de tourbillonnement (26) et une seconde zone (25a, 25b) disposée en aval directement après la zone de tourbillonnement (26).

12. Machine à café selon la revendication 10 ou 11, **caractérisée en ce qu'**au moins une rainure d'écoulement (27) s'étendant de manière axiale dans le sens d'écoulement de l'expresso est adjacente à la zone de tourbillonnement (26).

13. Machine à café selon l'une des revendications 1 à 8, **caractérisée en ce que** le dispositif (124) de production de crème comporte une buse à trou (130) avec une section d'écoulement inférieure par rapport à l'orifice d'alimentation (12a) et par rapport à l'orifice d'écoulement (15a).

14. Machine à café selon les revendications 7 et 13, **caractérisée en ce qu'**un canal d'écoulement (129) avec une section d'écoulement agrandie par rapport à la rainure de distribution (23) est placé avant la buse à trous (130).
